# EUROPÄISCHE PATENTANMELDUNG

(11) **EP 4 198 289 A1**
(43) Veröffentlichungstag der Anmeldung: **21.06.2023**
(21) Anmeldenummer: 22207628.3
(22) Anmeldetag: 15.11.2022
(51) Int. Cl.: F02D 41/22, F02D 13/02, F02D 41/14, F02D 41/00

(54) **DIAGNOSEVERFAHREN, STEUERGERÄT UND KRAFTFAHRZEUG**

(30) Priorität: 16.12.2021 DE 102021214543
(71) Anmelder: VOLKSWAGEN AG, 38440 Wolfsburg (DE)
(72) Erfinder: Hellmann, Jörg, 38440 Wolfsburg (DE); Piorun, Marcin, 38448 Wolfsburg (DE); Tomforde, Michael, 38518 Gifhorn (DE); Maletzki, Gunnar, 18057 Rostock (DE)

(57) **Zusammenfassung**

Die vorliegende Erfindung betrifft ein Diagnoseverfahren (100; 200; 200'), die dem ein Prädiktionswerts der indikativ für eine Phasenlage einer Nockenwellen ist, für einen vorbestimmten Zeitpunkt prädiziert wird (103; 203). Ferner wird ein Istwert, der indikativ für die Phasenlage der Nockenwelle ist, zu dem vorbestimmten Zeitpunkt ermittelt (105; 205). Schließlich wird ein Fehler in einer Nockenwellenverstellung zum Einstellen eines Zylinderventils eines Zylinders einer Brennkraftmaschine festgestellt basierend auf dem Prädiktionswert und dem Istwert (111; 219). Ferner betrifft die vorliegende Erfindung ein Steuergerät (500) und ein Kraftfahrzeug mit (600) mit demselben.

## Beschreibung

Die Erfindung betrifft einen Diagnoseverfahren, insbesondere zum Erkennen eines Fehlers in einer Nockenwellenverstellung, ein Steuergerät und ein Kraftfahrzeug.

Bei Nockenwellenantrieben ohne Verstellung wird die Nockenwelle über eine feste Verbindung wie beispielsweise einen Zahnriemen, eine Kette oder Zahnräder von der Kurbelwelle mit der halben Drehzahl angetrieben. Eine feste Kopplung der Nockenwelle an die Kurbelwelle führt allerdings zu einer ineffizienten Zylinderfüllung, d.h. einem nicht optimalen Frischluftanteil im Brennraum. Bei Ottomotoren wird deshalb der Frischluftanteil im Brennraum über eine Füllungserfassungsfunktion im Motorsteuergerät erfasst. Dieser Frischluftanteil im Brennraum wird maßgeblich durch den Öffnungs- und Schließzeitpunkt des Ladungswechselventils (Zylinderventil) beeinflusst. Um in allen Drehzahlbereichen eine möglichst effiziente Zylinderfüllung zu erreichen, werden mittels einer Nockenwellenverstellung die Einlass- und Auslass-Steuerzeiten in Abhängigkeit von Drehzahl und Drosselklappenstellung verändert. Zur Nockenwellenverstellung wird eine Verstelleinheit, beispielsweise ein mit Motoröldruck betriebener hydraulischer Phasenversteller eingesetzt, der auch als Schwenkmotorphasenversteller bezeichnet wird und gewöhnlich an den Nockenwellenenden in der Kraftübertragung platziert ist.

Ferner sind Verfahren und Systeme zum Steuern von Nockenwellenverstellungen bekannt.

Die DE 10 2018 104 977 A1 beschreibt ein Verfahren zum Steuern eines Systems zur variablen Nockenwellenverstellung. Das Verfahren beinhaltet ein Einstellen eines Nockenwellenverstellers mit einem Nockenwellenarbeitszyklus, der auf Grundlage einer abgetasteten Nockenwellenstellung bestimmt wird und ein Einstellen des Nockenwellenverstellers mit einer geschätzten Nockenwellenstellung, die auf Grundlage des Nockenwellenarbeitszyklus zwischen dem Abtasten der Nockenwellenstellung bestimmt wird.

Die DE 102 21988 A1 beschreibt ein Verfahren zur Bestimmung der Position eines Phasensystems zur variablen Nockenwellensteuerung für einen Motor mit einer Motorsteuerung, über die der Fluss der Einlassgase und der Auslassgase während des Verbrennungsprozesses kontrolliert wird. Das Verfahren umfasst die Schritte der Erzeugung eines Modells zur Abschätzung einer berechneten Nocken(wellen)position (cam position) und einer berechneten Änderungsrate der Nockenposition. Das Verfahren enthält ferner den Schritt der Messung einer tatsächlichen Nockenposition und einer tatsächlichen Änderungsrate der Nockenposition. Gemäß dem Verfahren wird die berechnete Nockenposition mit der gemessenen Nockenposition verglichen, und die berechnete Änderungsrate der Nockenposition wird basierend auf dem Vergleich mit der gemessenen tatsächlichen Änderungsrate der Nockenposition gemischt bzw. überlagert (blended). Die Motorsteuerung wird in Abhängigkeit von der gemischten Änderungsrate der Nockenposition angepasst.

Dabei kann es bei der Nockenwellenverstellung zu Fehlern kommen, die dazu führen, dass ein Einstellen der Öffnungs- und Schließzeitpunkt des Ladungswechselventils zu langsam oder schlimmstenfalls nicht erfolgt.

Zur Fehlererkennung beschreibt die WO 2004/092549 A1 eine Anomalie-Diagnosevorrichtung, die eine Anomalie eines einstellbaren Ventilmechanismus diagnostiziert, der eine Bewegungscharakteristik eines Ventils in einem Verbrennungsmotor variiert. Die Diagnosevorrichtung schätzt bspw. einen Phasenwinkel einer Nockenwelle (theoretischer Wert), der mit einer Variation des Zielphasenwinkels variiert, durch Berechnung gemäß einem physikalischen Modell und vergleicht den theoretischen Wert des Phasenwinkels mit einem tatsächlich beobachteten Wert des Phasenwinkels, um eine "Anomalie" des verstellbaren Ventilmechanismus festzustellen.

Bisher bekannte Verfahren und Systeme benötigen eine vergleichsweise lange Zeit, um ein sicheres Fehlerdiagnoseergebnis zu liefern.

Aufgabe der vorliegenden Erfindung ist es, ein Verfahren, ein Steuergerät und ein Kraftfahrzeug bereitzustellen, die eine verbesserte Fehlererkennung für eine Nockenwellenverstellung ermöglichen.

Diese Aufgabe wird durch das Verfahren nach Anspruch 1, das Steuergerät nach Anspruch 14 und das Kraftfahrzeug nach Anspruch 15 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der vorliegenden Erfindung betrifft ein Diagnoseverfahren, das folgende Schritte umfasst:
Prädizieren eines Prädiktionswerts, der indikativ für eine Phasenlage einer Nockenwellen ist, für einen vorbestimmten Zeitpunkt;
Ermitteln eines Istwerts, der indikativ für die Phasenlage der Nockenwelle ist, zu dem vorbestimmten Zeitpunkt;
Feststellen eines Fehlers in einer Nockenwellenverstellung zum Einstellen eines Zylinderventils eines Zylinders einer Brennkraftmaschine basierend auf dem Prädiktionswert und dem Istwert.

Das Diagnoseverfahren kann auf Brennkraftmaschinen angewendet werden, die mindestens einen Zylinder umfassen, wobei eine Zylinderfüllung über eine Ansteuerung der Zylinderventile, bspw. Einlass- und Auslassventile (Ladungswechselventile), eingestellt werden kann. Die Ventile können über entsprechende Einlass- bzw. Auslassnockenwellen eingestellt werden. Dabei wird eine Phasenlage der Nockenwellen (Nockenwellenphasenlage) eingestellt (verstellt), so dass Steuerzeiten der Zylinderventile eingestellt werden können. Die Phasenlage kann dabei einer Nockenwellenposition entsprechen.

Grundsätzlich wird eine Nockenwelle eingestellt, bspw. gesteuert oder geregelt, basierend auf einem entsprechenden Sollwert. In der Regel läuft der Istwert dem Sollwert hinterher.

Der Prädiktionswert und der Istwert sind indikativ für eine Phasenlage der Nockenwelle und können somit indikativ für einen Parameter sein, aus dem sich die Ventilbewegung des Zylinderventils bzw. der Zylinderventile ableiten lässt. Mit anderen Worten, der Parameter ist indikativ für eine Ventilsteuerung oder eine Ventilbewegung. Beispielsweise können der Prädiktionswert und der Istwert der Nockenwellenphasenlage entsprechen.

Der Prädiktionswert entspricht dabei dem zu erwartenden Istwert zu dem vorbestimmten Zeitpunkt (Diagnosezeitpunkt), wenn kein Fehler in der Nockenwellenverstellung zum Einstellen des Zylinderventils vorliegt. Damit ist gemeint, dass der Prädiktionswert eine Phasenlage bei ordnungsgemäßer Nockenwellenverstellung angibt.

Dabei kann der Prädiktionswert basierend auf einem Modell ermittelt werden. Das Modell kann bspw. kann empirisch, mathematisch, physikalisch und/oder statistisch erstellt sein.

Der Prädiktionswert wird für den vorbestimmten Zeitpunkt prädiziert, wobei der vorbestimmte Zeitpunkt beim Prädizieren in der Zukunft liegt. Das heißt, das der Prädiktionswert wird vorhergesagt. Somit sagt der Prädiktionswert zum Zeitpunkt des Prädizierens eine zukünftige Nockenwellenphasenlage voraus.

Hingegen wird das Ermitteln des Istwerts zum vorbestimmten Zeitpunkt selbst durchgeführt. Somit wird nach dem Prädizieren des Prädiktionswerts gewartet, bis der vorbestimmte Zeitpunkt vorliegt, und dann der Istwert ermittelt. Aus dem Istwert lässt sich somit die tatsächliche Phasenlage der Nockenwelle zum vorbestimmten Zeitpunkt ableiten.

Das Ermitteln des Istwerts kann beispielsweise über entsprechende Messeinrichtungen erfolgen. Beispielsweise kann die Messeinrichtung eingerichtet sein, eine Nockenwellenphasenlage zu erfassen. So kann an einem Nockenwellengeberrad der Einlass- und/oder Auslassnockenwelle ein Sensor angeordnet sein, der Daten erfasst, aus welchen sich der Istwert ermitteln lässt.

Basierend auf dem Prädiktionswert und dem Istwert kann ein Fehler in der Nockenwellenverstellung festgestellt werden. Dabei wird bspw. der Prädiktionswert mit dem Istwert verglichen.

Mit "Nockenwellenverstellung" ist gemeint, dass die Nockenwelle von einer ersten Phasenlage (Stellung) in eine zweite Phasenlage (Stellung) gebracht wird und umgekehrt.

Mit Fehler ist gemeint, dass eine ordnungsgemäße Funktion der Nockenwellenverstellung nicht vorliegt. Ein nicht ordnungsgemäße Funktionsweise liegt bspw. vor, wenn die Nockenwelle zu langsam oder nicht in ihrer Phasenlage verstellt wird. Letzteres kann auch als hängende Nockenwelle bezeichnet werden.

Indem der Prädiktionswert und der Istwert zur Fehleranalyse verwendet werden, kann eine Geschwindigkeit der Nockenwellenverstellung überwacht werden. Ferner kann so der Fehler in der Nockenwellenverstellung schnell erkannt werden, bspw. im Vergleich zu einer Überwachung eines Regelkreises für die Einstellanordnung. Somit ermöglicht das Diagnoseverfahren eine vergleichsweise schnelle Fehlererkennung.

Der Prädiktionswert kann für eine Zylinderfüllungserfassung, die eine Luftmasse zur Dosierung der Kraftstoffmasse berechnet, zur Verfügung gestellt werden.

In weiteren Ausführungsformen kann der vorbestimmte Zeitpunkt beim Prädizieren in der Zukunft liegen.

In anderen Ausführungsformen kann die Nockenwelle eine Einlassnockenwelle oder eine Auslassnockenwelle umfassen. So kann die Nockenwelle eine Einlassnockenwelle zum Einstellen eines Einlassventils des Zylinders und/oder eine Auslassnockenwelle zum Einstellen eines Auslassventils des Zylinders umfassen oder sein. Das heißt, das Prädizieren des Prädiktionswerts und das Ermitteln des Istwerts können für eine Phasenlage der Einlassnockenwelle und/oder der Auslassnockenwelle erfolgen.

In weiteren Ausführungsformen kann das Zylinderventil ein Einlassventil oder ein Auslassventil sein.

In anderen Ausführungsformen kann der vorbestimmte Zeitpunkt ein Öffnungszeitpunkt oder ein Schließzeitpunkt des Zylinderventils sein. In manchen Beispielen kann die Phasenlage der Einlassnockenwelle zu den Zeitpunkten "Einlassventil öffnet" (Einlassventil-Öffnungszeitpunkt) und "Einlassventil schließt" (Einlassventil-Schließzeitpunkt) und die Phasenlage der Auslassnockenwelle zum Zeitpunkt "Auslassventil schließt" (Auslassventil-Schließzeitpunkt) prädiziert werden. An diesen Zeitpunkten kann der Prädiktionswert für die Phasenlage der Nockenwellen besonders einfach und präzise ermittelt werden.

In weiteren Ausführungsformen kann das Diagnoseverfahren in einem vorbestimmten Diagnosezeitraum erfolgen. Der vorbestimmte Diagnosezeitraum kann so gewählt sein, dass er einem Betriebszeitraum der Brennkraftmaschine entspricht, in dem eine Nockenwellenverstellung erfolgt. Dadurch kann das Verfahren hinsichtlich Rechenleistung ressourcenschonend durchgeführt werden

In anderen Ausführungsformen kann der Fehler festgestellt werden basierend auf einer Differenz zwischen dem Prädiktionswert und dem Istwert. Mit "Differenz" ist gemeint, dass der Prädiktionswert von dem Istwert subtrahiert wird oder umgekehrt. Durch die Analyse der Differenz zwischen dem Prädiktionswert und dem Istwert kann eine Nockenwellenverstellgeschwindigkeit überwacht werden. Damit kann eine zu langsame Nockenwellenverstellung erkannt werden. Zusätzlich oder alternativ kann auch eine hängende Nockenwellenverstellung erkannt werden, bei der die Nockenwelle hängt/blockiert.

In weiteren Ausführungsformen kann der Fehler festgestellt werden auf der Basis, dass die Differenz zwischen dem Prädiktionswert und dem Istwert gleich oder größer als ein vorbestimmter Grenzwert ist. Somit kann der Fehler festgestellt werden, wenn die Differenz größer als der vorbestimmte Grenzwert ist. Alternativ kann auch der Fehler daraus abgeleitet werden, dass die Differenz größer als der vorbestimmte Grenzwert ist.

Der vorbestimmte Grenzwert kann bspw. derart gewählt werden, dass er indikativ für eine langsame oder hängende Nockenwellenverstellung ist. Der Vergleich der Differenz mit dem vorbestimmten Grenzwert ist besonders einfach in einer Diagnosesoftware implementierbar. Dadurch kann der Fehler in der Nockenwellenverstellung besonders einfach erkannt werden.

In anderen Ausführungsformen können das Prädizieren des Prädiktionswerts und das Ermitteln des Istwerts iterativ (bspw. über den vorbestimmten Diagnosezeitraum) für eine Vielzahl von vorbestimmten Zeitpunkten erfolgen. Und ferner kann das Diagnoseverfahren umfassen:
Erfassen eines Fehlerkriteriums in jedem Iterationsschritt, wenn die Differenz zwischen dem Prädiktionswert und dem Istwert gleich oder größer als der vorbestimmte Grenzwert ist; und
Feststellen des Fehlers, wenn eine Anzahl der Fehlerkriterien gleich oder größer als eine vorbestimmte Anzahl ist.

Der vorbestimmte Diagnosezeitraum umfasst dabei die Vielzahl von vorbestimmten Zeitpunkten. Mit anderen Worten, die Vielzahl von vorbestimmten Zeitpunkten liegt in dem vorbestimmten Diagnosezeitraum.

Das Fehlerkriterium kann dabei als Fehlerverdacht aufgefasst werden. Erst wenn die Anzahl der Fehlkriterien innerhalb des Diagnosezeitraums gleich oder größer als die vorbestimmte Anzahl (Fehlerkriteriumanzahl) ist, wird der Fehler festgestellt. Dadurch wird eine Fehlerentprellung realisiert, die das Diagnoseverfahren und somit die Fehlerkennung robuster gestaltet.

In weiteren Ausführungsformen kann die vorbestimmte Anzahl für ein vorbestimmtes Zeitintervall (Entprellzeit) vorgesehen sein. Damit ist gemeint, dass die vorbestimmte Anzahl für das vorbestimmte Zeitintervall definiert ist. Das vorbestimmte Zeitintervall kann bspw. von 0,5 Sekunden bis zu 1 Sekunde betragen. In manchen Beispielen kann das vorbestimmte Zeitintervall 1 Sekunde betragen. Das vorbestimmte Zeitintervall kann bspw. anfangen zu laufen bzw. starten, wenn ein Fehlerkriterium in der Iterationsschleife erstmalig festgestellt wird.

Es kann der Fehler also erkannt werden, wenn die Anzahl der Fehlerkriterien die vorbestimmte Anzahl innerhalb des vorbestimmten Zeitintervalls überschreitet. Somit kann das Diagnoseverfahren und somit die Fehlererkennung robuster gestaltet werden.

In anderen Ausführungsformen kann der vorbestimmte Grenzwert abhängig sein von einer Betriebsstrategie der Brennkraftmaschine. Die Betriebsstrategie kann bspw. eine Umsetzung einer dynamischen Lastanforderung (Beschleunigen, Bremsen, etc.) umfassen. Dabei können für verschiedene Betriebsstrategien verschiedene vorbestimmte Grenzwerte vorgesehen sein. Damit kann die Fehlererkennung präziser erfolgen.

In weiteren Ausführungsformen kann der vorbestimmte Grenzwert abhängig sein von einer Fehlerart der Nockenwellenverstellung. Mit Fehlerart sind die verschiedenen Fehler gemeint, die bei der Nockenwellenverstellung auftreten können.

So kann in manchen Ausführungsformen die Fehlerart eine langsame Nockenwellenverstellung und eine hängende (blockierte) Nockenwellenverstellung umfassen.

In manchen Ausführungsformen können auch zwei vorbestimmte Grenzwerte vorgesehen sein, wobei ein erster vorbestimmter Grenzwert indikativ für eine zu langsame Nockenwellenverstellung ist und ein zweiter vorbestimmter Grenzwert indikativ für eine hängende Nockenwellenverstellung ist. Dadurch wird eine vergleichsweise granulare Fehlererkennung ermöglicht.

Ein zweiter Aspekt der vorliegenden Erfindung betrifft ein Steuergerät, das dazu eingerichtet ist, eines der oben beschriebenen Diagnoseverfahren auszuführen.

Ein dritter Aspekt der vorliegenden Erfindung betrifft ein Kraftfahrzeug mit dem Steuergerät. Dabei ist das Kraftfahrzeug ferner dazu ausgebildet und eingerichtet, eines der oben beschriebenen Diagnoseverfahren auszuführen. Das Kraftfahrzeug umfasst dazu eine Brennkraftmaschine. Beispielsweise kann das Kraftfahrzeug einen rein verbrennungsmotorischen oder einen hybriden Antriebsstrang umfassen.

Ausführungsbeispiele der Erfindung werden nun beispielhaft und unter Bezugnahme auf die beigefügte Zeichnung beschrieben. Dabei zeigt:
- Fig. 1: ein Diagnoseverfahren gemäß einer ersten Ausführungsform;
- Fig. 2: ein Diagnoseverfahren gemäß einer zweiten Ausführungsform;
- Fig. 3: ein Diagnoseverfahren gemäß einer dritten Ausführungsform;
- Fig. 4: ein Verlaufsdiagramm für einen Sollwert, einen Prädiktionswert, einen Istwert einer Nockenwellenphasenlage sowie für ein Fehlerkriterium; und
- Fig. 5: schematisch ein Kraftfahrzeug mit einem Steuergerät

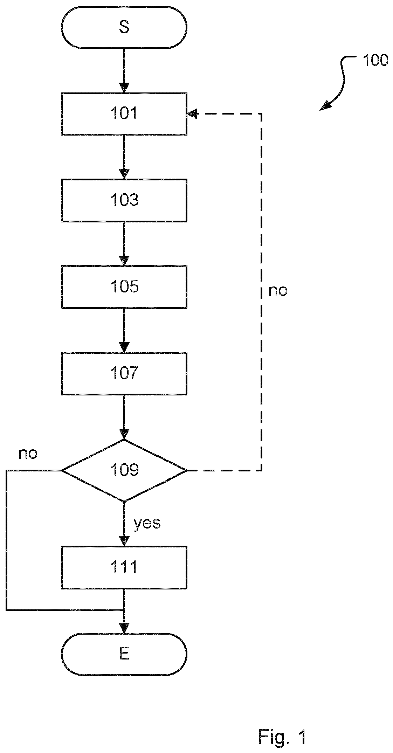

Fig. 1 zeigt ein Diagnoseverfahren 100 zum Feststellen eines Fehlers in einer Nockenwellenverstellung gemäß einer ersten Ausführungsform. Hier stellen Block S und Block E einen Start bzw. ein Ende des Diagnoseverfahrens 100 dar. Das Diagnoseverfahren 100 kann bspw. gestartet werden, wenn ein Diagnosezeitraum beginnt. Ein Diagnosezeitraum kann bspw. beginnen, wenn ein vorbestimmtes Ereignis eintritt, wie z.B. wenn ein Fahrerwunsch (z. B. Beschleunigung des Fahrzeugs) erfasst und ein entsprechendes Steuersignal über ein (später gezeigtes) Steuergerät 500 an eine (nicht gezeigte) Brennkraftmaschine eines (später gezeigten) Fahrzeugs 600 übermittelt wird.

Im Block 101 wird ein Sollwert für einen vorbestimmten Zeitpunkt ermittelt, wobei der Sollwert indikativ ist für eine Nockenwellenposition einer Einlass- und/oder einer Auslassnockenwelle zum Betreiben einer Brennkraftmaschine, bspw. zum Umsetzen einer Lastanforderung in einem Fahrbetrieb des Kraftfahrzeugs 600.

Der vorbestimmte Zeitpunkt kann bspw. ein Öffnungs- oder ein Schließzeitpunkt eines Einlassventils oder ein Schließzeitpunkt eines Auslassventils eines Zylinders einer Brennkraftmaschine des Kraftfahrzeugs 600 sein. Je nach vorbestimmtem Zeitpunkt wird der Sollwert somit für die Einlass- oder Auslassnockenwelle ermittelt.

Im Block 103 wird basierend auf dem Sollwert ein Prädiktionswert für den vorbestimmten Zeitpunkt (in der Zukunft) bestimmt, wobei der Prädiktionswert indikativ ist für die Nockenwellenposition der Einlass- und/oder Auslassnockenwelle.

Der Prädiktionswert kann basierend auf einem Modell ermittelt werden. Beispielsweise kann als Eingangsgröße der Sollwert in das Modell eingehen, das als Ausgansgröße den Prädiktionswert ausgibt.

Im Block 105 wird ein Istwert zum vorbestimmten Zeitpunkt ermittelt, wobei der Istwert indikativ ist für die tatsächliche Nockenwellenposition der Einlass- und/oder Auslassnockenwelle. Das heißt, nachdem der Prädiktionswert ermittelt wurde, wird gewartet, bis der vorbestimmte Zeitpunkt vorliegt, um dann die tatsächliche Nockenwellenposition zum vorbestimmtem Zeitpunkt zu ermitteln. Der Istwert kann beispielsweise basierend von Daten von Sensoren ermittelt werden, die an einem Nockenwellengeberrad der Einlass- und/oder Auslassnockenwelle angeordnet sind.

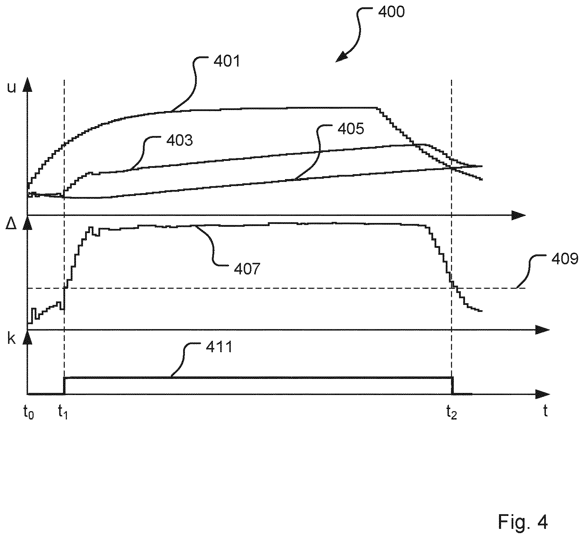

Im Block 107 wird der Prädiktionswert für den vorbestimmten Zeitpunkt mit dem Istwert verglichen. Dabei wird eine (in Fig. 4 gezeigte) Abweichung (Differenz) 407 zwischen dem Prädiktionswert und dem Istwert ermittelt.

Im Block 109 wird überprüft, ob die Abweichung 407 gleich oder größer als ein vorbestimmter Grenzwert ist. Alternativ kann geprüft werden, ob die Abweichung 407 größer als ein weiterer vorbestimmter Grenzwert 407 ist. Der vorbestimmte Grenzwert kann indikativ für einen ersten Fehler sein. Der weitere vorbestimmte Grenzwert kann indikativ für einen zweiten Fehler sein. Der erste Fehler entspricht dabei einer hängenden Nockenwellenverstellung und der zweite Fehler einer langsamen Nockenwellenverstellung.

Wenn die Überprüfung im Block 109 ergibt, dass die Abweichung 407 gleich oder größer als der vorbestimmte Grenzwert ist, geht das Verfahren zu Block 111 über.

Im Block 111 wird dann festgestellt, dass ein Fehler in der Nockenwellenverstellung vorliegt. Das heißt, dass die Einlass- oder Auslassnockenwelle (je nachdem, welcher vorbestimmte Zeitpunkt betrachtet wurde) zu langsam verstellt wurde oder überhaupt nicht (d.h. blockiert/hängt). Im Block 111 kann zusätzlich ein Fehlereintrag in dem Steuergerät 500 hinterlegt werden, bspw. in dessen Speicher 504.

Wenn die Überprüfung im Block 109 ergibt, dass die Abweichung 407 kleiner als der vorbestimmte Grenzwert ist, wird festgestellt, dass kein Fehler vorliegt und somit die Nockenwellenverstellung ordnungsgemäß ausgeführt wird. Das Verfahren 100 geht dann weiter zu Block E und wird somit beendet.

In einer Modifikation des Diagnoseverfahrens 100 kann dieses auch iterativ ausgeführt werden. So kann das Diagnoseverfahren 100 wieder zu Block 101 zurückspringen (siehe gestrichelte Linie), wenn die Überprüfung im Block 109 ergibt, dass die Abweichung 407 kleiner als der vorbestimmte Grenzwert ist. Die Iteration kann gemäß einem Zeitraster erfolgen, d.h. die Iteration wird in vorbestimmten (und ggfs. regelmäßigen oder sogar gleichmäßigen) Zeitabständen durchgeführt.

In einer weiteren Modifikation kann das Diagnoseverfahren 100 immer wieder neu ausgeführt werden. So kann bspw. das Diagnoseverfahren 100 gemäß dem Zeitraster jedes Mal neu ausgeführt werden.

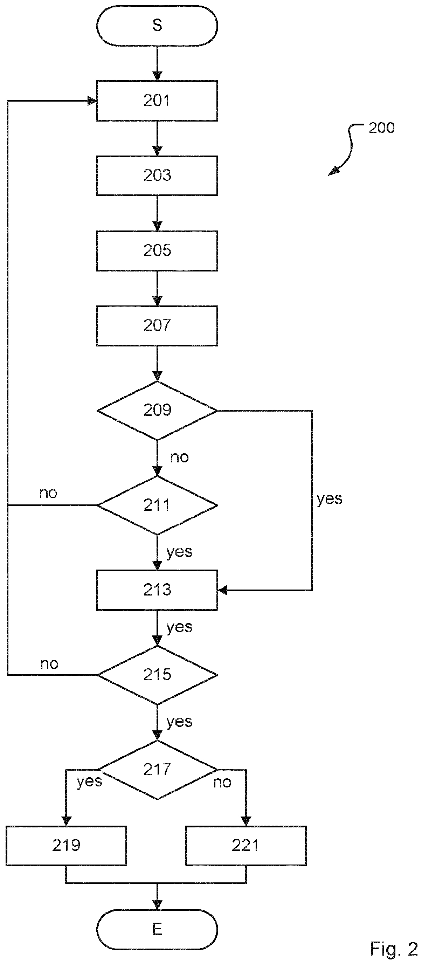

Fig. 2 zeigt ein Diagnoseverfahren 200 zum Feststellen eines Fehlers in einer Nockenwellenverstellung gemäß einer ersten Ausführungsform. Hier stellen Block S und Block E einen Start bzw. ein Ende des Diagnoseverfahrens 200 dar. Das Diagnoseverfahren 200 kann bspw. gestartet werden, wenn der Diagnosezeitraum beginnt.

Die Blöcke 201, 203, 205, 207 des Diagnoseverfahrens 200 entsprechend den Blöcken 101, 103, 105 bzw. 107 des Diagnoseverfahrens 100 aus Fig. 1. Zur Vermeidung von Wiederholung gilt somit das oben Beschriebene.

Im Block 209 wird überprüft, ob die Abweichung 407 zwischen dem Prädiktionswert und dem Istwert gleich oder größer als der vorbestimmter Grenzwert ist. Hier ist der vorbestimmte Grenzwert indikativ für einen ersten Fehler in der Nockenwellenverstellung. Beispielsweise kann der erste Fehler eine hängende (blockierte) Nockenwellenverstellung umfassen.

Wenn die Überprüfung im Block 209 ergibt, dass die Abweichung 407 gleich oder größer als der vorbestimmte Grenzwert ist, geht das Verfahren zu Block 213 über. Im Block 213 wird ein erstes Fehlerkriterium k₁ erfasst und ein entsprechender Eintrag hinterlegt, bspw. in dem Speicher 504 des Steuergeräts 500.

Wenn die Überprüfung im Block 209 ergibt, dass die Abweichung 407 kleiner als der vorbestimmte Grenzwert ist, dann geht das Diagnoseverfahren zu Block 211 über.

Im Block 211 wird überprüft, ob die Abweichung 407 zwischen dem Prädiktionswert und dem Istwert gleich oder größer als ein (in Fig. 4 gezeigter) weiterer vorbestimmter Grenzwert (409) ist. Der weitere vorbestimmte Grenzwert 409 ist kleiner als der vorbestimmte Grenzwert. Der weitere vorbestimmte Grenzwert 409 ist indikativ für einen zweiten Fehler in der Nockenwellenverstellung. Beispielsweise kann der zweite Fehler eine zu langsame Nockenwellenverstellung umfassen.

Wenn die Überprüfung im Block 211 ergibt, dass die Abweichung 407 kleiner als der weitere vorbestimmte Grenzwert 409 ist, dann springt das Diagnoseverfahren 200 zurück zum Block 201. Beispielsweise kann die erneute Durchführung des Blocks 201 im nächsten Rechenschritt eines Zeitrasters erfolgen. Das heißt, die erneute Durchführung des Blocks 201 erfolgt in vorbestimmten (und ggfs. regelmäßigen oder sogar gleichmäßigen) Zeitabständen.

Wenn die Überprüfung im Block 211 ergibt, dass die Abweichung 407 gleich oder größer als der weitere vorbestimmte Grenzwert ist, geht das Verfahren zu Block 213 über. Im Block 213 wird ein zweites Fehlerkriterium k₂ erfasst und ein entsprechender Eintrag hinterlegt, bspw. in dem Speicher 504 des Steuergeräts 500.

Im Block 213 wird somit das erste und/oder das zweite Fehlerkriterium k₁, k₂ erfasst. Mit dem erstmaligen Erfassen des ersten oder zweiten Fehlerkriteriums k₁, k₂ im Block 213 (innerhalb des Diagnosezeitraums) wird eine Fehlerentprellung gestartet.

Nach Block 213 geht das Verfahren weiter zu Block 215. Im Block 215 wird überprüft, ob eine vergangene Zeit seit einem erstmaligen Erfassen des ersten und/oder zweiten Fehlerkriteriums k₁, k₂ gleich oder größer als ein vorbestimmtes Zeitintervall (Entprellzeit) ist. Der Zeitpunkt des erstmaligen Erfassens des ersten und/oder zweiten Fehlerkriteriums k₁, k₂ kann in dem Speicher 504 hinterlegt werden. So können auch zwei solcher Erfassungszeitpunkte hinterlegt werden, wobei einer für das erstmalige Erfassen des ersten Fehlerkriteriums k₁ hinterlegt wird und ein weiterer für das erstmalige Erfassen des zweiten Fehlerkriteriums k₁.

Wenn die Überprüfung im Block 215 ergibt, dass die vergangene Zeit kleiner als die Entprellzeit ist, dann springt das Diagnoseverfahren 200 zurück zu Block 201. Beispielsweise kann die erneute Durchführung des Blocks 201 im nächsten Rechenschritt des Zeitrasters erfolgen. In manchen Beispielen erfolgt im Block 215 die Überprüfung der vergangenen Zeit mit Bezug zum erstmaligen Erfassungszeitpunkt des ersten Fehlerkriteriums k₁, wenn das erste Fehlerkriterium k₁ vor dem zweiten Fehlerkriterium k₂ erfasst wird. In anderen Beispielen erfolgt im Block 215 die Überprüfung der vergangenen Zeit mit Bezug zum erstmaligen Erfassungszeitpunkt des zweiten Fehlerkriteriums k₂, wenn das zweite Fehlerkriterium k₁ vor dem erste Fehlerkriterium k₁ erfasst wird.

Wenn die Überprüfung im Block 215 ergibt, dass die vergangene Zeit gleich oder größer als die Entprellzeit ist, dann geht das Diagnoseverfahren über zu Block 217.

Im Block 217 wird überprüft, ob eine Anzahl der erfassten ersten Fehlerkriterien k₁ oder eine Anzahl der erfassten zweiten Fehlerkriterien k₂ gleich oder größer als eine vorbestimmte Anzahl ist. Die Anzahl der erfassten ersten und/oder zweiten Fehlerkriterien k₁, k₂ können im Speicher 504 abgelegt sein.

Wenn die Überprüfung in Block 217 ergibt, dass die Anzahl der ersten oder zweiten Fehlerkriterien k₁, k₂ gleich oder größer als die vorbestimmte Anzahl ist, dann geht das Verfahren weiter zu Block 219. Im Block 219 wird festgestellt, dass ein Fehler in der Nockenwellenverstellung vorliegt. Entsprechend kann ein Fehlereintrag in dem Speicher 504 des Steuergeräts 500 hinterlegt werden.

Wenn die Überprüfung in Block 217 ergibt, dass die Anzahl der ersten oder zweiten Fehlerkriterien k₁, k₂ kleiner als die vorbestimmte Anzahl ist, dann geht das Verfahren weiter zu Block 221. Im Block 221 wird festgestellt, dass kein Fehler in der Nockenwellenverstellung vorliegt. Entsprechend wird kein Fehlereintrag in dem Speicher 504 des Steuergeräts 500 hinterlegt.

Je nachdem, ob die Anzahl der ersten Fehlerkriterien k₁ oder die Anzahl der zweiten Fehlerkriterien k₂ die vorbestimmte Anzahl überschreitet, wird ein entsprechender Fehlereintrag hinterlegt. Beispielsweise sind die ersten Fehlerkriterien k₁ indikativ für den ersten Fehler, der eine hängende Nockenwellenverstellung umfasst, und die zweiten Fehlerkriterien k₂ indikativ für den zweiten Fehler, der eine zu langsame Nockenwellenverstellung umfasst.

Nach Block 219 wird das Diagnoseverfahren 200 im Block E beendet.

In dem Diagnoseverfahren 200 wird eine Fehlerentprellung durchgeführt wird, indem der Prädiktionswert mit dem Istwert für verschiedene vorbestimmte Zeitpunkte innerhalb der Entprellzeit und die Anzahl der Fehlerkriterien k₁, k₂ mit der vorbestimmten Anzahl an Fehlerkriterien verglichen wird. Somit kann eine Fehlererkennung durch das Diagnoseverfahren 200 robuster gestaltet werden.

Das Diagnoseverfahren 200 kann auch derart modifiziert werden, dass nur einer der Blöcke 209 und 211 vorgesehen ist. Somit kann das Diagnoseverfahren 200 darauf gerichtet sein, nur eine Fehlerart zu erkennen, nämlich eine zu langsame Nockenwellenverstellung oder eine blockierende Nockenwellenverstellung.

Das heißt, falls in der Modifikation nur Block 209 vorgesehen ist und die Überprüfung ergibt, dass die Abweichung 407 kleiner als der vorbestimmte Grenzwert 409 ist, dann geht das Diagnoseverfahren 200 zurück zu Block 201, anstatt zu Block 211. Wenn die Überprüfung ergibt, dass die Abweichung 407 gleich oder größer als der vorbestimmte Grenzwert ist, dann geht das Diagnoseverfahren 200 zu Block 213.

Falls in der Modifikation nur Block 211 vorgesehen ist, gilt das oben zu Block 211 Beschriebene.

In einer weiteren Modifikation kann auch die Reihenfolge der Überprüfung gegen den vorbestimmten Grenzwert und den weiteren vorbestimmten Grenzwert vertauscht werden. Damit ist gemeint, dass im Block 209 überprüft wird, ob die Abweichung 407 gleich oder größer als der weitere vorbestimmte Grenzwert 409 ist. Entsprechend wird im Block 211 überprüft, ob die Abweichung 407 gleich oder größer als der vorbestimmte Grenzwert ist.

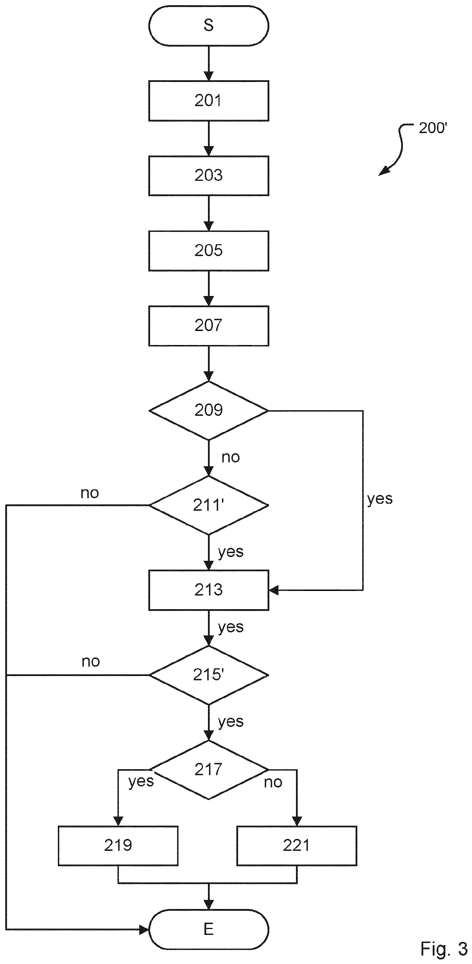

Fig. 3 zeigt ein Diagnoseverfahren 200' gemäß einer dritten Ausführungsform. Das Diagnoseverfahren 200' nach der dritten Ausführungsform unterscheidet sich von dem Diagnoseverfahren 200 nach der zweiten Ausführungsform in Blöcken 211' und 215'. Das Diagnoseverfahren 200' wird erstmalig ausgeführt, wenn der Diagnosezeitraum beginnt. Innerhalb des Diagnosezeitraums wird das Diagnoseverfahren 200' dann in vorbestimmten Zeitabständen mehrmals ausgeführt. Die vorbestimmten Zeitabständen können bspw. regelmäßig oder sogar gleichmäßig sein.

Im Block 211' wird überprüft, ob die Abweichung 407 zwischen dem Prädiktionswert und dem Istwert gleich oder größer als der (in Fig. 4 gezeigte) weitere vorbestimmte Grenzwert (409) ist. Wenn die Überprüfung im Block 211 ergibt, dass die Abweichung 407 kleiner als der weitere vorbestimmte Grenzwert 409 ist, dann wird das Diagnoseverfahren 200' beendet.

Wenn die Überprüfung im Block 211' ergibt, dass die Abweichung 407 gleich oder größer als der weitere vorbestimmte Grenzwert ist, geht das Verfahren zu Block 213 über.

Im Block 215' wird überprüft, ob eine vergangene Zeit seit einem erstmaligen Erfassen des ersten und/oder zweiten Fehlerkriteriums k₁, k₂ gleich oder größer als die Entprellzeit ist. Der Zeitpunkt des erstmaligen Erfassens des ersten und/oder zweiten Fehlerkriteriums k₁, k₂ kann in dem Speicher 504 hinterlegt werden. In manchen Beispielen erfolgt im Block 215' die Überprüfung der vergangenen Zeit mit Bezug zum erstmaligen Erfassungszeitpunkt des ersten Fehlerkriteriums k₁, wenn das erste Fehlerkriterium k₁ vor dem zweiten Fehlerkriterium k₂ erfasst wird. In anderen Beispielen erfolgt im Block 215' die Überprüfung der vergangenen Zeit mit Bezug zum erstmaligen Erfassungszeitpunkt des zweiten Fehlerkriteriums k₂, wenn das zweite Fehlerkriterium k₁ vor dem erste Fehlerkriterium k₁ erfasst wird.

Wenn die Überprüfung im Block 215' ergibt, dass die vergangene Zeit kleiner als die Entprellzeit ist, dann wird das Diagnoseverfahren 200' beendet. Wenn die Überprüfung im Block 215' ergibt, dass die vergangene Zeit gleich oder größer als die Entprellzeit ist, dann geht das Diagnoseverfahren über zu Block 217.

Durch das mehrmalige Durchführen des Diagnoseverfahrens 200' wird eine Fehlerentprellung durchgeführt wird, indem der Prädiktionswert mit dem Istwert für verschiedene vorbestimmte Zeitpunkte innerhalb der Entprellzeit und die Anzahl der Fehlerkriterien k₁, k₂ mit der vorbestimmten Anzahl an Fehlerkriterien verglichen wird. Somit kann eine Fehlererkennung durch das Diagnoseverfahren 200' ebenfalls robuster gestaltet werden.

Die mit Bezug zum Diagnoseverfahren 200 gemäß der zweiten Ausführungsform beschriebenen Modifikationen sind ebenfalls auf das Diagnoseverfahren 200' gemäß der dritten Ausführungsform anwendbar.

In Fig. 4 ist ein Diagramm 400 gezeigt, das eine typische Fahrsituation mit einem Lastwechsel darstellt, nämlich eine kurzzeitige Lastanforderung für eine Beschleunigung des Kraftfahrzeugs 600. Dabei beginnt die Lastanforderung zum Zeitpunkt t₀. Zur Umsetzung der Lastanforderung wird eine Zylinderfüllung einer Brennkraftmaschine des Kraftfahrzeugs 600 über eine entsprechende Ventilsteuerung eingestellt. Die Ventilsteuerung erfolgt über eine Nockenwellenanordnung, die die Einlassnockenwelle zur Steuerung von Einlassventilen des Zylinders und die Auslassnockenwelle zur Steuerung von Auslassventilen des Zylinders umfasst. Im Speziellen werden dabei die Ventilöffnungszeiten über die Nockenwellenanordnung eingestellt. Die Ventilöffnungszeiten werden über eine Phasenlage der entsprechenden Nockenwellen gesteuert.

Das Diagramm 400 ist in drei Bereiche unterteilt, die eine Nockenwellenposition u, eine Abweichung Δ zwischen dem Prädiktionswert und dem Istwert sowie das Vorliegen eines Fehlerkriteriums k über die Zeit t darstellen.

In dem Diagramm 400 sind daher ein Sollwert-Verlauf 401, ein Prädiktionswert-Verlauf 403 und ein Istwert-Verlauf 405 für eine Phasenlage einer Nockenwelle dargestellt. Ferner ist eine Abweichung 407 zwischen dem Prädiktionswert-Verlauf 403 und dem Istwert-Verlauf 405 dargestellt. Schließlich ist eine Fehlerkriterium-Verlauf 411 dargestellt, der indikativ für einen Fehler in der Nockenwellenverstellung ist. Das Diagramm 400 kann bspw. aus der Durchführung des Diagnoseverfahrens 200 oder aus dem mehrmaligen Durchführen des Diagnoseverfahrens 200' resultieren, wobei Block 209 nicht vorgesehen ist. Die Verläufe in Fig. 4 sind qualitativ und schematisch dargestellt.

Der Sollwert-Verlauf 401 ist der von einer Steuerung/Regelung vorgegebene Verlauf für die Nockenwellenphasenlage der Einlass- und/oder Auslassnockenwelle zur Umsetzung der Lastanforderung.

Der Prädiktionswert-Verlauf 403 ist dabei der prädizierte Wert für die Nockenwellenphasenlage zu den vorbestimmten Zeitpunkten. Der Prädiktionswert-Verlauf 403 ist dabei der zu erwartende Ist-Verlauf, sofern die Nockenwellenverstellung ordnungsgemäß funktioniert, d.h. keine Fehler aufweist.
Der Ist-Verlauf 405 ist der erfasste und somit tatsächliche Verlauf der Nockenwellenphasenlage.

Wie aus Fig. 4 zu erkennen ist, weichen die Istwerte von den Prädiktionswerten ab bzw. der Istwert-Verlauf 405 weicht von dem Prädiktionswert-Verlauf 403 ab. Diese Abweichung (Differenz) bzw. dieser Abweichungsverlauf (Differenzverlauf) 407 ist indikativ für einen Fehler in der Nockenwellenverstellung. Insbesondere ist die Abweichung indikativ für einen Fehler, wenn die Differenz zwischen dem Prädiktionswert und dem Istwert den weiteren vorbestimmten Grenzwert 409 überschreitet bzw. gleich oder größer ist als der weitere vorbestimmte Grenzwert 409, wie es ab dem Zeitpunkt t₁ der Fall ist. Der Differenzverlauf 407 bildet dabei den Betrag der Differenz zwischen den Prädiktionswerten und den Istwerten ab.

In Fig. 4 ist ein Verlauf 411 für das (zweite) Fehlerkriterium k₂ dargestellt. Dabei wird ein Wert für das zweite Fehlerkriterium k₂ auf "1" gesetzt, wenn die Differenz 407 den weiteren vorbestimmten Grenzwert 409 überschreitet.

Nach dem Zeitpunkt t₂ ist die Differenz 407 zwischen den Prädiktionswerten und den Istwerten wieder kleiner als der weitere vorbestimmte Grenzwert 409. Entsprechend liegt auch kein zweites Fehlerkriterium k₂ mehr vor und der Wert des Fehlerkriteriums fällt wieder auf "0".

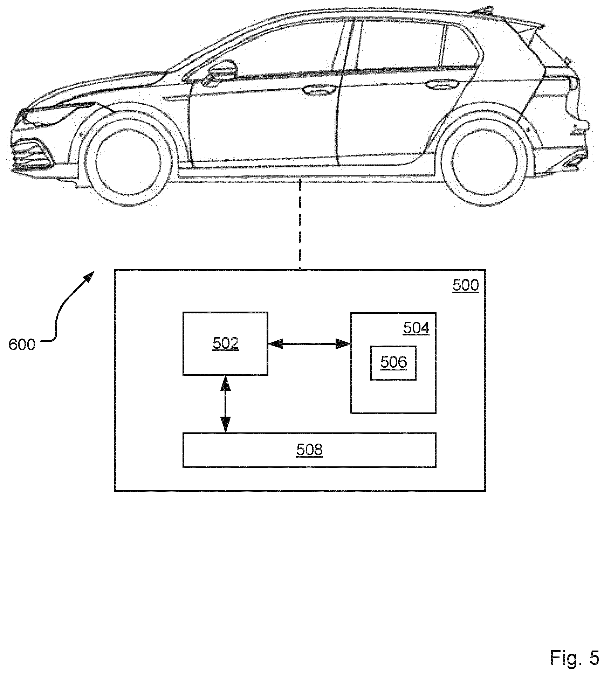

Fig. 5 zeigt schematisch das Kraftfahrzeug 600 mit dem Steuergerät 500.

Das Kraftfahrzeug 600 umfasst zumindest einen verbrennungsmotorischen Antrieb mit einer Brennkraftmaschine. Das Steuergerät 500 ist in dem Kraftfahrzeug 600 angeordnet.

Das Steuergerät 500 kann als Motorsteuergerät ausgebildet und eingerichtet sein, die oben beschriebenen Diagnoseverfahren 100, 200 auszuführen. Das Steuergerät 500 umfasst einen Prozessor 502, einen Speicher (elektronisches Speichermedium) 504 und eine Schnittstelle 508. Ferner ist in dem Speicher 504 auch eine Software (ein Computerprogramm) 506 hinterlegt, die dazu ausgelegt ist, die oben beschriebenen Diagnoseverfahren 100, 200 auszuführen. Der Prozessor 502 ist dazu ausgelegt, Programminstruktionen der Software 506 auszuführen. Die Schnittstelle 508 ist ferner dazu ausgelegt, Daten zu empfangen und auszusenden. Es kann sich bspw. um eine Schnittstelle zu einem CAN-Bus des Kraftfahrzeugs handeln, über den das Steuergerät 500 Signale empfängt und Steuerbefehle aussendet.

### Bezugszeichenliste

- 100: Diagnoseverfahren
- 200: Diagnoseverfahren
- 200': Diagnoseverfahren
- 400: Diagramm für einen Sollwert-, einen Prädiktionswert-, einen Istwert und einen Fehlerkriterium-Verlauf
- 402: CAN-BUS
- 500: Steuergerät
- 502: Prozessor
- 504: Speicher
- 506: Software
- 508: Schnittstelle
- 600: Kraftfahrzeug

## Patentansprüche

1. Diagnoseverfahren (100; 200; 200'), umfassend:
(103; 203) Prädizieren eines Prädiktionswerts, der indikativ für eine Phasenlage einer Nockenwellen ist, für einen vorbestimmten Zeitpunkt;
(105; 205) Ermitteln eines Istwerts, der indikativ für die Phasenlage der Nockenwelle ist, zu dem vorbestimmten Zeitpunkt;
(111; 219) Feststellen eines Fehlers in einer Nockenwellenverstellung zum Einstellen eines Zylinderventils eines Zylinders einer Brennkraftmaschine basierend auf dem Prädiktionswert und dem Istwert.

2. Diagnoseverfahren (100; 200; 200') nach Anspruch 1, wobei der vorbestimmte Zeitpunkt beim Prädizieren in der Zukunft liegt.

3. Diagnoseverfahren (100; 200; 200') nach Anspruch 1 oder 2, wobei die Nockenwelle eine Einlassnockenwelle oder eine Auslassnockenwelle umfasst.

4. Diagnoseverfahren (100; 200; 200') nach einem der vorherigen Ansprüche, wobei das Zylinderventil ein Einlassventil oder ein Auslassventil ist.

5. Diagnoseverfahren (100; 200; 200') nach einem der vorherigen Ansprüche, wobei der vorbestimmte Zeitpunkt ein Öffnungszeitpunkt oder ein Schließzeitpunkt des Zylinderventils ist.

6. Diagnoseverfahren (100; 200; 200') nach einem der vorherigen Ansprüche, wobei das Diagnoseverfahren (100; 200; 200') in einem vorbestimmten Diagnosezeitraum durchgeführt wird.

7. Diagnoseverfahren (100; 200; 200') nach einem der vorherigen Ansprüche, wobei der Fehler festgestellt wird basierend auf einer Differenz (407) zwischen dem Prädiktionswert und dem Istwert.

8. Diagnoseverfahren (100; 200; 200') nach Anspruch 7, wobei der Fehler festgestellt wird auf der Basis, dass die Differenz (407) zwischen dem Prädiktionswert und dem Istwert gleich oder größer als ein vorbestimmter Grenzwert (409) ist.

9. Diagnoseverfahren (200; 200') nach Anspruch 7 oder 8, wobei das Prädizieren des Prädiktionswerts und das Ermitteln des Istwerts iterativ für eine Vielzahl von vorbestimmten Zeitpunkten erfolgt und das Diagnoseverfahren ferner umfasst:
(213) Erfassen eines Fehlerkriteriums in jedem Iterationsschritt, wenn die Differenz (407) zwischen dem Prädiktionswert und dem Istwert gleich oder größer als der vorbestimmte Grenzwert ist; und
(219) Feststellen des Fehlers, wenn eine Anzahl der Fehlerkriterien gleich oder größer als eine vorbestimmte Anzahl ist.

10. Diagnoseverfahren (200; 200') nach Anspruch 9, wobei die vorbestimmte Anzahl für ein vorbestimmtes Zeitintervall vorgesehen ist.

11. Diagnoseverfahren (100; 200; 200') nach einem der Ansprüche 7 bis 10, wobei der vorbestimmte Grenzwert abhängig ist von einer Betriebsstrategie der Brennkraftmaschine.

12. Diagnoseverfahren (100; 200; 200') nach einem der Ansprüche 7 bis 11, wobei der vorbestimmte Grenzwert abhängig ist von einer Fehlerart der Nockenwellenverstellung.

13. Diagnoseverfahren (100; 200; 200') nach Anspruch 12, wobei die Fehlerart eine langsame Nockenwellenverstellung und eine hängende Nockenwellenverstellung umfasst.

14. Steuergerät (500), das dazu eingerichtet ist, ein Diagnoseverfahren (100; 200; 200') nach einem der vorherigen Ansprüche auszuführen.

15. Kraftfahrzeug (600) mit einem Steuergerät (500) nach Anspruch 14.
